Europäisches Patentamt

European Patent Office

Office européen des brevets

(11) Publication number: **0 332 286**
A2

(12) **EUROPEAN PATENT APPLICATION**

(21) Application number: **89300691.6**

(22) Date of filing: **25.01.89**

(51) Int. Cl.⁴: **H04L 11/08**

(30) Priority: **09.03.88 US 165854**

(43) Date of publication of application:
**13.09.89 Bulletin 89/37**

(84) Designated Contracting States:
**DE FR GB IT**

(71) Applicant: **Hewlett-Packard Company**
**3000 Hanover Street**
**Palo Alto California 94304(US)**

(72) Inventor: **Godlew, Scott A.**
**604 Wispering Winds Drive**
**Woodland Park Colorado 80863(US)**
Inventor: **Rader, John R.**
**7145 Baker Road**
**Colorado Springs Colorado 80908(US)**

(74) Representative: **Colgan, Stephen James et al**
**CARPMAELS & RANSFORD 43 Bloomsbury**
**Square**
**London WC1A 2RA(GB)**

(54) **Programmable protocol analyzer.**

㊄ The programmable protocol analyzer enables a user to specify (102-106) one or more fields (501-526) that are to be monitored (107-109) by the protocol analyzer and displayed (110-111) to the user. The specified fields (501-526) can be selected (103-104) from a menu of predefined fields (501-526) in the frame of data or can be user defined fields (524) of arbitrary length and position in the frame (Frame) of data. The programmable protocol analyzer excerpts (107-109) these specified fields (501-526) from the transmitted frame (Frame) of data, stores the specified fields (501-526) in a memory and displays (110-111) the data contained in the specified fields (501-526) to the user. This programmable protocol analyzer thereby permits a user to monitor and display only the particular segments of the frame (Frame) of data that are of interest to the user. This arrangement filters out the extraneous information contained in the frame (Frame) of data in order that the user can concentrate on only the particular fields (501-526) that are most relevant to the test being performed by the user.

Fig. 1

# PROGRAMMABLE PROTOCOL ANALYZER

## Field of the Invention

This invention relates to protocol analyzers and, in particular, to a programmable protocol analyzer that enables the user to identify one or more fields, each having a predetermined length, in a frame of data that will be monitored and displayed by the protocol analyzer.

## Problem

It is a problem in the field of protocol analyzers to monitor and display information that appears in a data frame that is transmitted over a data transmission network. The data transmission network is a physical media that interconnects two or more autonomous data processing elements. Each data processing element consists of a data terminal equipment (DTE) that is a device intended to send or receive information in the form of digital signals. This data terminal equipment typically can be a computer, a CRT, an automated bank teller machine, or a remote sensing device. The data circuit terminating equipment (DCE) associated with the data terminal equipment converts the digital signals generated by the data terminal equipment into a form or format that can be transmitted over the data transmission network that interconnects the data processing devices. The signals that are transmitted between the data terminal equipment, the data circuit terminating equipment and the data transmission network are organized into frames of data.

A protocol analyzer is a piece of test equipment that can be interposed between any of these above-described elements in order to monitor the frames of data that are transmitted between these pieces of equipment. The protocol analyzer receives and stores the frames of data that are transmitted and typically provides a display by which a user can monitor the frames of data that are being stored by the protocol analyzer. The difficulty with this arrangement is that a frame of data contains a significant amount of information and the typical protocol analyzer cannot present only selected fields in this data transmission. Therefore, the protocol analyzer cannot monitor and present only the information that is relevant to the user performing the test on the data transmission equipment.

## Solution

These problems are solved and a technical advance achieved in the field by the programmable protocol analyzer of this invention. The programmable protocol analyzer enables a user to specify one or more fields that are to be monitored by the protocol analyzer and displayed to the user. The specified fields can be selected from a menu of predefined fields in the frame of data or can be user defined fields of arbitrary length and position in the frame of data. The programmable protocol analyzer excerpts these specified fields from the transmitted frame of data, stores the specified fields in a memory and displays the data contained in the specified fields to the user. This programmable protocol analyzer thereby permits a user to monitor and display only the particular segments of the frame of data that are of interest to the user. This arrangement filters out the extraneous information contained in the frame of data in order that the user can concentrate on only the particular fields that are most relevant to the test being performed by the user.

## Brief Description of the Drawing

Figure 1 illustrates in flow diagram form the operational steps performed by the programmable protocol analyzer;

Figure 2 illustrates the structure of a typical frame of data in the X.25 protocol;

Figures 3 through 5 illustrate typical displays that appear on the programmable protocol analyzer to enable the user to define the fields of interest to be monitored;

Figure 6 illustrates a typical data display on the programmable protocol analyzer illustrative of the programmed fields.

Detailed Description of the Drawing

A data transmission network is a physical media that interconnects two or more data processing equipments. Each data processing equipment consists of a data terminal equipment (DTE) that is a device intended to send or receive information in the form of digital signals. The data terminal equipment typically can be a computer, a CRT, an automated bank teller machine or a remote sensing device. The data processing equipment also includes a data circuit terminating equipment (DCE) that functions to convert the digital signals generated by the data terminal equipment into a form or format that can be transmitted over the data transmission network to another data processing equipment. The data transmission network typically is a packet switching network that allows many data processing equipments to share a set of physical circuits. Each data processing equipment is connected to an endpoint on the packet switching network. The data generated by the data terminal equipment is converted into frames of packet data by the data circuit terminating equipment. The packet switching network is designed to transmit bursty data, since data processing equipment typically produce output data on an unscheduled and irregular basis. The data frames created by the data circuit terminating equipment are transmitted one frame at a time over the packet switching network to a designated destination. Each data frame is interspersed among data frames from other data processing equipment on the physical facilities (data transmission circuits) of the packet switching network. Extensive control information is added to the data in the data frame by the data circuit terminating equipment in order to insure that all of the data frames arrive at the designated destination and in the correct order. In addition, to simplify the design of data transmission networks, these networks are organized as a set of layers or levels each of which offers a set of transparent services to the layer above. Each layer on a given data processing equipment carries out a virtual communication with a corresponding layer on the other data processing equipment with which it is communicating.

Data Frame Protocols

Advanced data communicaiton control procedures (ADCCP) is a class of link layer protocols known as bit oriented protocols. This class includes vendor protocols such as IBM's synchronous data link control (SDLC) and Univac's universal data link control (UDLC). It also includes protocols from standards organizations such as ISO's high level data link control (HDLC) and the link access procedure balanced (LAPB) defined by the CCITT in recommendation X.25. These bit oriented protocols use a particular data unit known as the frame.

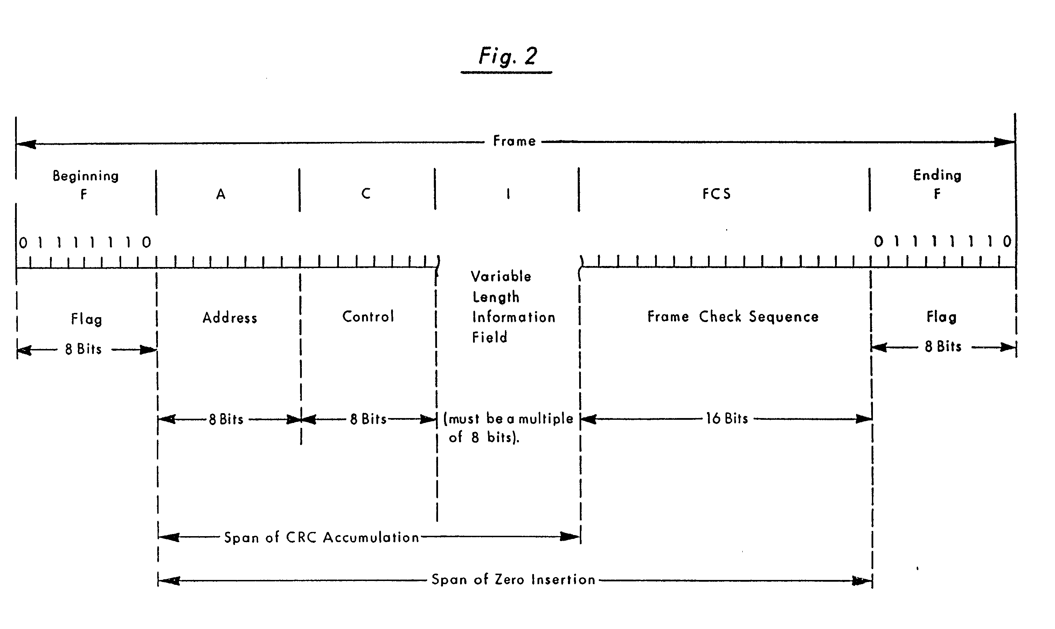

Figure 2 illustrates a typical frame of data that is transmitted through the data transmission network. The frame consists of a number of predefined fields that include from left to right: flag (beginning); address; control; information; frame check sequence; flag (ending). Both the beginning and ending flag fields have an 8 bit pattern of "0,1,1,1,1,1,1,0". The flags at the beginning and the end of the data frame delimit the data frame from adjacent data frames. A data processing equipment in receiving a data transmission scans for the six consecutive one bits to denote the beginning of the frame of data. Similarly the data processing equipment scans for another six consecutive one bits to delimit the end of the frame of data that is received. The second field in the frame is the address field which identifies a station or a group of stations on a multipoint data link. The address field also indicates whether a frame is a command or a response frame. The address field is typically 8 bits long. The third field in the frame is the control field that typically consists of 8 bits of information to indicate what type of frame is being sent: information, supervisory, unnumbered. Information frames pass data and acknowledge received information frames while supervisory frames indicate the busy/idle status of the data processing equipment and unnumbered frames are used for administrative purposes. The fourth field in the frame is the information field that contains user data or control information and is a multiple of 8 bits. The fifth field in the frame is the frame check sequence field consists of 16 bits used for error detection purposes. The contents of the address, control and information fields are included in the calculation of the frame check sequence using a cyclic redundancy check generator algorithm.

EP 0 332 286 A2

Protocol Analyzers

These various fields of the frame of data constitute a significant amount of information for a user to monitor and analyze. A protocol analyzer is the device typically used to monitor, for test and analysis purpose, frames of data that are transmitted by data processing equipment. A typical state of the art commercially available protocol analyzer is the Hewlett-Packard Model 4952A Protocol Analyzer. The protocol analyzer is interposed either between the data terminal equipment and the data circuit terminating equipment or between the data circuit terminating equipment and the data transmission network. The protocol analyzer functions to capture the frames of data that are transmitted between these various equipments for test and analysis purposes. The protocol analyzer includes a memory to store the captured frame of data and display device (such as a CRT) to output the captured frame of data in human-readable form. The protocol analyzer is typically equipped with a keyboard to enable a user to input control information into the protocol analyzer to regulate its operation. The frame of data is sufficiently large that the user would display only a portion of the frame of data. Existing protocol analyzers typically provide a number of test routines that monitor and display only certain predefined segments of the received frame. The difficulty with such an arrangement is that for a particular maintenance situation, the user may desire to monitor and display other fields or other combinations of fields of the frame that are not included in these predefined test routines.

Programmable Protocol Analyzer

The programmable protocol analyzer enables a user to specify one or more fields that are to be monitored by the protocol analyzer and displayed to the user. The specified fields can be selected from a menu of predefined fields in the frame of data or can be user defined fields of arbitrary length and position in the frame of data. The programmable protocol analyzer excerpts these specified fields from the transmitted frame of data, stores the specified fields in a memory and displays the data contained in the specified fields to the user. This programmable protocol analyzer thereby permits a user to monitor and display only the particular segments of the frame of data that are of interest to the user. This arrangement filters out the extraneous information contained in the frame of data in order that the user can concentrate on only the particular fields that are most relevant to the test being performed by the user.

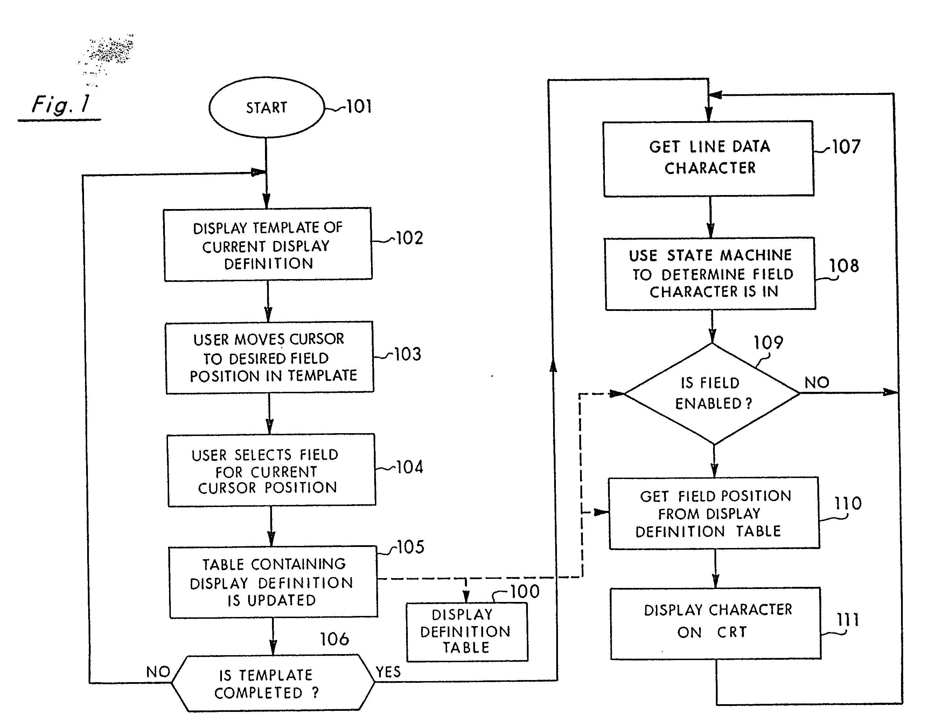

The programmable protocol analyzer is a test application program for existing protocol analyzers. The Hewlett-Packard Model 4952A Protocol Analyzer (for example) can be loaded in well-known fashion with this application program to perform these functions. The programmable protocol analyzer makes use of the operational procedure illustrated in Figure 1 to permit the user to identify one or more fields that are monitored and displayed by the programmable protocol analyzer on the associated CRT display. This procedure begins at step 101 where the user activates the programmable protocol analyzer. At step 102 the programmable protocol analyzer displays the template of the current display definition on the CRT display. At step 103 the user moves the cursor to the position of the desired field in the template and at step 104 the user selects the field for the current cursor position. Once this selection is made at step 105, the programmable protocol analyzer updates the display definition table 100 with the new information entered by the user at the previous steps. At step 106 the programmable protocol analyzer determines whether the template definition is completed. If it is not completed, processing returns to step 102 where steps 102 through 106 are reiterated until the entire template is defined by the user and processing can advance to the monitoring and analysis phase.

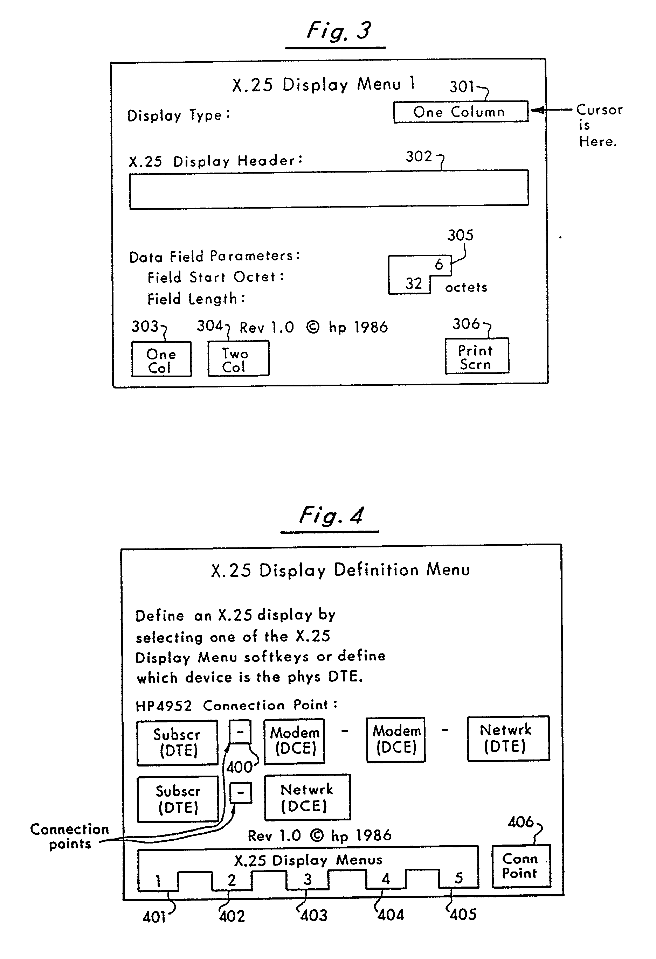

In order to elaborate the operation of steps 102 through 106 listed above, Figures 3 through 5 are provided to illustrate various template selections that can be accomplished by the user. Each of these figures illustrate a display on a cathode ray tube display that is part of the programmable protocol analyzer. The elements on the display in Figures 3 through 5 that are outlined in a rectangular box are fields that are writable by the user, making use of the cursor and the keyboard. The cursor is moved up and down and right and left by the keys on the keyboard associated with the programmable protocol analyzer that are designated with corresponding directional arrows. The exception to this statement are the entries on the display along the lower edge that are delimited by a rectangular box. Selections of these various items are accomplished by pressing the corresponding programmable key located on the keyboard just below these display items. Thus, on Figures 3 through 6 up to six items are displayed along the lower boundary of the display and these can individually be selected by depressing an associated programmable key located just below the corresponding noted item.

4

## Display Definition Menu

Figure 4 illustrates the first display that is presented to the user by the programmable protocol analyzer. This is the display definition menu that enables the user to indicate the place in the data transmission network that the programmable protocol analyzer is connected. Thus, the programmable protocol analyzer can be connected between any two of the elements denoted by rectangular boxes on Figure 3. The programmable protocol analyzer can typically be connected between the subscriber data terminal equipment and the network data circuit terminating equipment. The user moves the cursor to the appropriate location on the display (ex- 400) illustrated in Figure 4 to denote the connection position of the programmable protocol analyzer. The user then operates the programmable key located below the rectangular box 406 denoted as "Conn Point" to input this data to the programmable protocol analyzer. The user then selects one of the five display menus denoted by the five rectangular boxes 401-405 along the lower edge of the display of Figure 3. For the purpose of this illustration, assume that the user operates a programmable key located just below the display menu selection listed as 1 (rectangular box 401).

## Display Menu

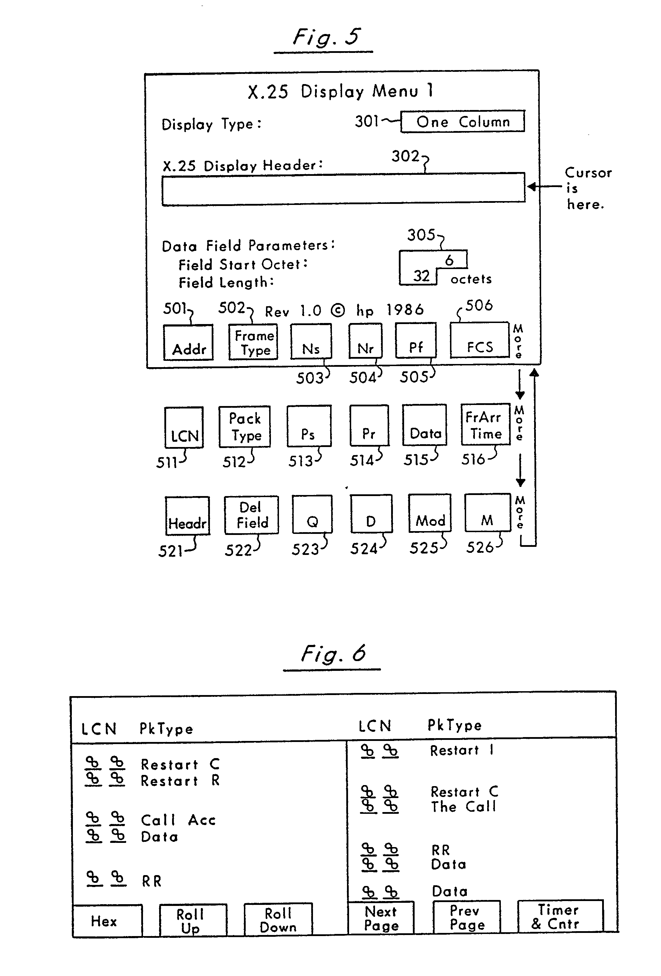

The programmable protocol analyzer replaces the display illustrated in Figure 4 with the display illustrated in Figure 3 to allow the user to further define the display menu 1. The display illustrated in Figure 3 is the presentation format selection where the cursor is initially placed in the rectangular area 301 to the right of the entry "Display Type". The user can then operate one of the two selection keys 303, 304 on the lower left hand corner of the display of Figure 3 to denote whether the output on the CRT display during the test phase should appear in one column or two column format. In order to provide for easy reading of the CRT display, in one column format, 32 characters are provided per line for two lines per frame of data and the subscriber information is displayed in normal video while network information is displayed in inverse video. In two column format, each column contains 15 characters per line with a maximum of two lines per frame of data and the subscriber information is displayed on the left half of the CRT display while the network information is displayed on the right half of the CRT display. Once the user makes a selection by depressing the programmable key located below either the entry denoted "One Col" or "Two Col", the display presented by programmable protocol analyzer is changed to that illustrated in Figure 5 and the cursor is positioned in the rectangular box 302 located below the entry "Display Header". Figure 5 illustrates 18 possible header selections (501-506, 511-516, 521-526) that the user can select. Six of these selections (501-506) are illustrated in the display menu along the lower boundary while twelve more (511-516, 521-526) are aligned below these six (501-506) in groupings of six each. The user can sequence between these three groupings of six header selections by depressing a key on the keyboard labeled "more". Thus, the display header 302 can be defined to display various predefined fields that are contained in the frame of data that is to be monitored.

## Display Header Entries

The following table gives the amount of field space in bits of display header 302 consumed in the header definition:

EP 0 332 286 A2

| Field Name | Abbreviation | Space Used |
|---|---|---|
| Frame Address | A | 1 |
| Frame Type | FType | 5 |
| Ns | Ns | 3 |
| Nr | Nr | 3 |
| Ps | Ps | 3 |
| Pr | Pr | 3 |
| P/F | $P_F$ | 1 |
| Q | Q | 1 |
| D | D | 1 |
| M | M | 1 |
| Mod | Mod | 3 |
| LCN | LCN | 3 |
| Packet Type | PkType | 9 |
| Data | dd...d | up to 32 |
| Frame Arrival Time | Fr | 6 |
| FCS | F | 1 |

The various predefined fields are standard fields that are part of the frame of data illustrated in Figure 2. The definition of these predefined fields is given below.

Frame Address (A)

The frame address (A) is displayed as a hex character.

Frame Type (FType)

All of the frame types are decoded and their 5 character abbreviations are as follows:

| Frame Type | Abbreviation |
|---|---|
| Information | INFO |
| Receive Ready | RR |
| Receive Not Ready | RNR |
| Reject | REJ |
| Set Asynchronous Balanced Mode | SABM |
| Set Async Balanced Mode Extended | SABME |
| Disconnect | DISC |
| Disconnected Mode | DM |
| Unnumbered Acknowledgement | UA |
| Frame Reject | FRMR |

Ns and Nr

Ns is the sequence number of this frame of information.
Nr is the sequence number of the next expected frame of information.

Ps And Pr

Ps and Pr specifies the numbering of the packets sent and received respectively.

6

PF (P<sub>F</sub>)

This field is a 1 when the P/F (Poll/Final) bit is set, and a blank when the P/F is not set.

Q, D and M

These fields are simply displayed as a 1 or a 0. .

Mod

Mod is displayed as either "8", "128", or Undefined (UND).

Packet Type (PkType)

All of the packet types are decoded and their 9 character abbreviations are as follows:

| Packet Type | Abbreviation |
|---|---|
| Incoming Call | Inc Call |
| Call Request | Call Req |
| Call Connected | Call Con |
| Call Accepted | Call Acc |
| Clear Indication | Clr Ind |
| Clear Request | Clr Req |
| Clear Confirmation | Clr Conf |
| DTE Clear Confirmation | Clr Conf |
| DCE Data | Data |
| DTE Data | Data |
| DCE Interrupt | DCE Int |
| DTE Interrupt | DTE Int |
| DCE Interrupt Confirmation | Int Conf |
| DTE Interrupt Confirmation | Int Conf |
| DCE RR | RR |
| E RR | RR |
| DCE RNR | RNR |
| DTE RNR | RNR |
| DTE REJ | REJ |
| Reset Indication | Reset Ind |
| Reset Request | Reset Req |
| DCE Reset Confirmation | Reset Con |
| DTE Reset Confirmation | Reset Con |
| Restart Indication | Restart 1 |
| Restart Request | Restart R |
| DCE Restart Confirmation | Restart C |
| DTE Restart Confirmation | Restart C |
| Diagnostic | Diag |
| Registration Confirmation | Reg Conf |
| Registration Request | Reg Req |

LCN

LCN is the logical channel number and includes both the logical channel group number LCGN and the logical channel number in this logical channel group LCN. It is displayed as a hexadecimal number.

## Data (dd...d)

Data is a user definable field using rectangular box 305 on Figure 5. The field can be defined to be any length up to 32 characters in a one column display or up to 15 characters in a two column display. The user specifies the frame octet with which this user defined field is to begin. The data field can be displayed in either the data code selected in the setup menu or in hex.

This field allows the user to display as much of the data in a data packet as desired up to the limit. It is also possible to display decoded data and undecoded data at the same time. For example, assume that the data field has been setup to be 1 octet long and to start at frame octet 5 (Packet Type Identifier field), and the Packet Type has been selected to be displayed. The Data field decode will show the Packet Type Identifier field in an undecoded format, and the Packet Type field will show the same information, but decoded to indicate the packet type as a mnemonic.

## Frame Arrival Time (FrTime)

The frame arrival time is displayed ONLY during Examine Data. It is measured from the start of the run to the frame's end flag. The time is displayed as a 6 digit number in milliseconds.

## Frame Arrival Time Overflow

An overflow occurs after 99999 milliseconds. If an overflow occurs, the result will be followed by an * . If a second overflow occurs, the * is no longer displayed.

## FCS (F)

The FCS is displayed as "G" for good. "B" for bad and "A" for abort. The "B" and "A" blink to indicate an error.

## Test Sequence

Once all the selections have been made by the user, processing advances from step 106 to step 107 where the operational test sequence begins. In this mode, the programmable protocol analyzer is connected to the equipment under test and the frame of data is being transmitted between the two equipments. The programmable protocol analyzer at step 107 retrieves each data character from the line being monitored. At step 108 the state machine in the programmable protocol analyzer determines the field in which this data character is located based on the framing synchronization. At step 109, the programmable protocol analyzer determines whether this field has been enabled by the user for monitoring purposes. This determination is accomplished by reading the data stored in the display definition table that has been programmed by the user. If the field is not enabled by the user, processing advances back to step 107 where the subsequent data character is retrieved and steps 107, 108 and 109 are repeated until the retrieved data character is located in a field that has been enabled by the user as part of the display definition. Once such a data character has been retrieved, processing advances to step 110 where the field position information is obtained from the display definition table so that the programmable protocol analyzer can display this data character in the appropriate position on the display. At step 111 the programmable protocol analyzer displays the character on the CRT display so that user can view the data from the selected field in the frame as it is being received and stored in buffer memory in the protocol analyzer.

Figure 6 illustrates a typical display that is selected by the user using the programmable protocol analyzer. On Figure 6 the display illustrates that the user has selected the logical channel number and the packet type as the information fields to be displayed by the programmable protocol analyzer. The logical channel number includes the logical channel group number as well as the logical channel number for this frame. The fields on the left half of the display represent subscriber information while the fields on the right half of the display represent network information. Thus, the user has elected to view only the type of packets that are received and the various logical channel numbers. The remaining information in the frames of data are stored in the memory of the programmable protocol analyzer but are not displayed to the user.

8

Thus, the user views only that data that is relevant to the operation that the user is performing. The data that is displayed represent only the predefined fields and the segments of the data that are specifically selected by the user in the order selected by the user for this particular test. This adaptability enables the user to focus on only the information that is relevant rather than having the protocol analyzer dictate the information that the user can obtain.

While a specific embodiment of this invention has been disclosed herein, it is expected that those skilled in the art can design other embodiments that differ from this particular embodiment but all within the scope of the appended claims.

**Claims**

1. Apparatus connectable to a data transmission medium for monitoring the transmission of frames (Frame) of information on said transmission medium comprising:
means (100-106) for storing data input by a user identifying one or more fields (501-526) in said frame (Frame);
means (107-109) connected to said storing means (100-105) and responsive to the transmission of a frame (Frame) on said transmission medium for excerpting said identified fields (501-526) from said transmitted frame (Frame);
means (110-111) for displaying said excerpted fields (501-526) from said transmitted frame (Frame).

2. The apparatus of claim 1 wherein said storing means (100-106) includes:
means (102) for providing said user with a list of predefined fields (501-526) in said frame (Frame) of information.

3. The apparatus of claim 1 wherein said storing means (100-106) includes:
means (103-104) for designating a user defined field (524) in said frame (Frame).

4. The apparatus for claim 3 wherein said designating (103-104) means includes:
means (305) for specifying the octet position (6) in said frame (Frame) that begins said user defined field (524);
means (305) for defining the length (32) of said user defined field (524).

5. The apparatus of claim 1 wherein said storing means (100-106) includes:
means (105-106) for ordering said identified fields (501-526) in a sequence determined by said user.

6. The apparatus of claim 1 wherein said displaying means (110-111) includes:
means (111) for outputting the data contents of said excerpted fields (501-526) in a human-readable form.

7. Apparatus connectable to a data transmission medium for monitoring the transmission of data frames (Frame) on said transmission medium comprising:
means (100-105) for storing data input by a user identifying one or more fields (501-526) in said data frame including:
means (102) for providing said user with a list of predefined fields (501-526) in said data frame (Frame);
means (103-104) for designating a user defined field (524) in said data frame;
means (305) for defining the length (32) of said user defined field (524);
means (107-109) connected to said storing means (100-105) and responsive to the transmission of a data frame (Frame) on said transmission medium for excerpting said identified fields (501-526) from said transmitted data frame (Frame);
means (110-111) for displaying said excerpted fields (501-526) from said transmitted frame (Frame).

8. A method of monitoring the transmission of data frames (Frame) on a transmission medium comprising the steps of:
storing (101-106) data input by a user identifying one or more fields (501-526) in said data frame (Frame);
excerpting (107-109), in response to the transmission of a data frame (Frame) on said transmission medium, said identified fields (501-526) from said transmitted data frame (Frame);
displaying (110-111) said excerpted fields (501-526) from said transmitted data frame (Frame).

9. The method of claim 8 further including the step of:
providing (102) said user with a list of predefined fields (501-526) in said data frame (Frame).

10. The method of claim 8 further including the step of:
designating (103-104) a user defined field (524) in said data frame (Frame).

11. The method of claim 10 wherein said step of designating (103-104) includes the steps of:
specifying (305) the octet position (6) in said data frame that begins said user defined field (524);
defining (305) the length (32) of said user defined field (524).

12. A method of monitoring the transmission of data frames (Frame) on a transmission medium comprising the steps of:
providing (102) said user with a list of predefined fields (501-526) in said data frame (Frame);
designating (103-104) one or more user defined fields (524) in said data frame (Frame), including the steps of:
specifying (305) the octet position (6) in said data frame (Frame) that begins each of said user defined fields (524);
defining (305) the length (32) of each of said user defined fields (524);
storing (105) data input by a user identifying one or more of said predefined (501-526) and user defined (524) fields in said data frame (Frame);
excerpting (107-109), in response to the transmission of a data frame (Frame) on said transmission medium, said identified fields (501-526) from said transmitted data frame (Frame);
displaying (110-111) said excerpted fields (501-526) from said transmitted data frame (Frame).

13. A protocol analyzer that is connectable to a data transmission medium for monitoring the transmission of frames (Frame) of data on said transmission medium, wherein said protocol analyzer includes a user programmable field display comprising:
means (102) for providing said user with a list of predefined fields (501-526)in said frame (Frame) of data;
means (103-106) for storing data input by a user identifying one or more of said fields (501-526) in said frame (Frame) of data;
means (107-109) connected to said storing means (103-106) and responsive to the transmission of a frame (Frame) of data on said transmission medium for excerpting said identified fields (501-526) from said transmitted frame (Frame) of data;
means (110-111) for displaying said excerpted fields (501-526) from said transmitted frame (Frame) in human-readable form.

14. The apparatus of claim 13 wherein said storing means (103-106) includes:
means (103-104) for designating a user defined field (524) in said frame (Frame) of data.

15. The apparatus of claim 14 wherein said designating means (103-104) includes:
means (305) for specifying the octet position (6) in said frame (Frame) of data that begins said user defined field (524);
means (305) for defining the length (32) of said user defined field (524).

16. In a protocol analyzer that is connectable to a data transmission medium for monitoring the transmission of frames (Frame) of data on said transmission medium, a method of programming a field display that is included in said protocol analyzer comprising the steps of:
providing (102) said user with a list of predefined fields (501-526) in said frame (Frame) of data;
storing (103-106) data input by a user identifying one or more of said fields (501-526) in said frame (Frame) of data;
excerpting (107-109) said identified fields (501-526) from said transmitted frame (Frame) of data;
displaying (110-111) said excerpted fields (501-526) from said transmitted frame (Frame) in human-readable form.

17. The apparatus of claim 16 wherein said step of storing (103-106) includes the step of:
designating (103-104) a user defined field (524) in said frame (Frame) of data.

18 The apparatus of claim 17 wherein said step of designating (103-104) includes the steps of:
specifying (305)the octet position (6) in said frame (Frame) of data that begins said user defined field (524);
defining (305) the length (32) of said user defined field (524).

Fig. 1

START — 101

DISPLAY TEMPLATE OF CURRENT DISPLAY DEFINITION — 102

USER MOVES CURSOR TO DESIRED FIELD POSITION IN TEMPLATE — 103

USER SELECTS FIELD FOR CURRENT CURSOR POSITION — 104

TABLE CONTAINING DISPLAY DEFINITION IS UPDATED — 105

DISPLAY DEFINITION TABLE — 100

106 IS TEMPLATE COMPLETED? NO / YES

GET LINE DATA CHARACTER — 107

USE STATE MACHINE TO DETERMINE FIELD CHARACTER IS IN — 108

109 IS FIELD ENABLED? NO

GET FIELD POSITION FROM DISPLAY DEFINITION TABLE — 110

DISPLAY CHARACTER ON CRT — 111

EP 0 332 286 A2

## Fig. 2

Frame

| Beginning F | A | C | I | FCS | Ending F |

0 1 1 1 1 1 1 0                        0 1 1 1 1 1 1 0

Flag      Address      Control      Variable Length Information Field      Frame Check Sequence      Flag

8 Bits                                                        8 Bits

8 Bits      8 Bits      (must be a multiple of 8 bits).      16 Bits

Span of CRC Accumulation

Span of Zero Insertion

EP 0 332 286 A2

## _Fig. 3_

X.25 Display Menu 1     301⌐

Display Type :                    One Column          ◄── Cursor
                                                          is
                                                          Here.

X.25 Display Header :        302⌐

Data Field Parameters :                          305
   Field Start Octet :                    ⌐6
   Field Length :                    32⌐   octets

303⌐     304⌐ Rev 1.0 © hp 1986          306⌐
  One       Two                            Print
  Col       Col                            Scrn

## _Fig. 4_

X.25 Display Definition Menu

Define an X.25 display by
selecting one of the X.25
Display Menu softkeys or define
which device is the phys DTE.

HP4952 Connection Point :

Subscr      –    Modem    –    Modem    –    Netwrk
(DTE)            (DCE)         (DCE)         (DTE)
           400

Subscr      –    Netwrk
(DTE)            (DCE)

Connection                                        406⌐
points                Rev 1.0 © hp 1986        Conn
                  X.25 Display Menus            Point

      1        2        3        4        5

     401⌐   402⌐    403⌐    404⌐    405⌐

EP 0 332 286 A2

## Fig. 5

X.25 Display Menu 1

Display Type: 301 ~ | One Column |

X.25 Display Header: 302 ⌐

[                                                    ] ← Cursor is here.

Data Field Parameters: 305 ⌐
Field Start Octet: | 6 |
Field Length: | 32 | octets

501 ⌐  502 ⌐  Rev 1.0 © hp 1986  ⌐506

| Addr | | Frame Type | | Ns | | Nr | | Pf | | FCS | More
503⌐  504⌐  505⌐

| LCN | | Pack Type | | Ps | | Pr | | Data | | FrArr Time | More
511⌐  512⌐  513⌐  514⌐  515⌐  516⌐

| Headr | | Del Field | | Q | | D | | Mod | | M | More
521⌐  522⌐  523⌐  524⌐  525⌐  526⌐

## Fig. 6

| LCN | PkType | | LCN | PkType |
|---|---|---|---|---|
| ‰ ‰ | Restart C | | ‰ ‰ | Restart I |
| ‰ ‰ | Restart R | | | |
| | | | ‰ ‰ | Restart C |
| ‰ ‰ | Call Acc | | ‰ ‰ | The Call |
| ‰ ‰ | Data | | | |
| | | | ‰ ‰ | RR |
| | | | ‰ ‰ | Data |
| ‰ ‰ | RR | | ‰ ‰ | Data |

| Hex | Roll Up | Roll Down | Next Page | Prev Page | Timer & Cntr |